# EUROPÄISCHE PATENTANMELDUNG

(11) **EP 0 669 728 A2**
(43) Veröffentlichungstag der Anmeldung: **30.08.1995**
(21) Anmeldenummer: 95102057.7
(22) Anmeldetag: 15.02.1995
(51) Int. Cl.: H04B 1/38

(54) **Mobilfunkendgerät**

(30) Priorität: 26.02.1994 DE 4406390
(71) Anmelder: Alcatel SEL Aktiengesellschaft, D-70435 Stuttgart (DE); ALCATEL N.V., NL-2288 BH Rijswijk (NL)
(72) Erfinder: Hörmann, Thomas, D-71723 Grossbottwar (DE)
(74) Vertreter: Knecht, Ulrich Karl

(57) **Zusammenfassung**

Das Mobilfunkendgerät soll in einem Fahrzeug bedienbar sein, ohne die Hände von der Lenkvorrichtung wegzunehmen und ohne den Fahrzeugführer abzulenken.

Vorrichtung, bestehend aus einem Mobilfunkendgerät und einem abtrennbaren, an oder in der Lenkvorrichtung, zu befestigenden Bedienmittel. Das Bedienmittel dient zur Steuerung eines Zeigers auf einer Bedienoberfläche und es können damit Anwendungsfunktionen ausgelöst werden.

## Beschreibung

Die Erfindung betrifft ein Mobilfunkendgerät und dessen Anwendungsgebiete, insbesondere das Telefonieren in einem Fahrzeug.

Mobilfunkendgeräte finden am häufigsten Einsatz in einem Fahrzeug. Lange Fahrtzeiten zwischen zwei weit entfernten Orten sowie hohes Verkehrsaufkommen führen dazu, daß der Mensch viel Zeit in einem Fahrzeug verbringt. Zur besseren Zeitausnutzung im beruflichen Sinne oder zur Kommunikation im privaten Sinne führen deshalb immer mehr Menschen ein Mobilfunktelefon mit sich.

Während des eigentlichen Fahrens wird ein Fahrzeugführer durch Bedienprozeduren des Mobilfunkendgerätes vom Fahren abgelenkt, denn die Bedienprozeduren setzen sich aus Handgriffen zusammen, die es erfordern, eine Hand von einem Lenkrad zu nehmen. Ebenso muß der Blick, anstatt den laufenden Straßenverkehr zu beobachten, zur Bestätigung einer richtig ausgeführten Handbewegung, auf die das Mobilfunkendgerät bedienende Hand gelenkt werden.

Aus dem Stand der Technik ist eine europäische Patentanmeldung EP 0 362 376 bekannt, welche unterschiedliche Lösungsansätze anbietet, die darauf zielen, eine fehlerfreie Wahl einer Telefonnummer zu ermöglichen und die ebenfalls darauf abzielen, daß die die Wahl ausführende Person möglichst wenig abgelenkt wird.

Hierbei wird unter anderem erläutert, daß die Tastatur zum Wählen einer Telefonnummer an einem Handbremsengriff oder aber an einem Kupplungsgriff angebracht werden kann. Als Display zur Anzeige der gewählten Telefonnummer wird beispielweise der Rückspiegel verwendet oder aber ein in das Armaturenbrett eingebautes Display. Als weitere Möglichkeit wird beschrieben, daß das Mobilfunktelefon in das Armaturenbrett, ähnlich wie ein Autoradio, integriert und so angeordnet wird, daß der Blick nicht gesenkt werden muß, sondern auf derselben Höhe wie z.B. ein Tachometer angebracht ist. Die Tastatur befindet sich für diesen Fall auf der Rückseite des Hörers, ebenso wie das Display.

Eine weitere in der Schrift beschriebene Variante ist folgende: Eine Anordung von Tasten, die z.B. in der Verwendung für elektrische Fensterheber bereits bekannt ist, dient dazu, die jweilige Telefonnummer einzutippen. Hierbei wird für die erste Zahl der Telefonnummer so lange auf eine Taste gedrückt, bis die gewünschte Zahl erscheint. Wenn die richtige Zahl erreicht ist, wird durch Betätigung einer weiteren Taste dieses bestätigt. Dies erfolgt so lange, bis die komplette Rufnummer eingegeben ist und durch Betätigung einer bestimmten Taste wird die endgültige Wahl als Ruf ausgesendet. Das Display hierzu ist dabei z.B. wiederum der Rückspiegel. Die Anordnung der Tasten befindet sich hierbei beispielweise in der Mittelkonsole oder in der Türverkleidung.

Ebenso ist aus der Patentschrift DE 3608497 ein Verfahren und eine Einrichtung zum sprachgesteuerten Bedienen eines Fernmeldeendgerätes bekannt. Eine Aktivierung des Apparates kann beispielsweise durch Einsprechen eines Kommandowortes erfolgen. Wahlziele oder Telefonnummern werden hierzu per Sprache eingesprochen. Um eine falsche Wahl zu vermeiden, werden die erkannten Worte in der Reihenfolge der größten Ähnlichkeit wiederholt und können durch ein erneut eingesprochenes Bestätigungswort aktiviert werden oder auch nicht. Der Rechen- und Speicheraufwand ist für eine sprachgesteuerte Teilnehmerwahl aber sehr hoch, besonders wenn die Erkennungswahrscheinlichkeit möglichst groß sein soll. Die im Fahrzeug durch Umgebungs- und Fahrtgeräusche extrem geräuschbehaftete Umgebung erschwert die Spracherkennung und die Erkennungswahrscheinlichkeit sehr.

Es ist Aufgabe der vorliegenden Erfindung, ein Mobilfunkendgerät vorzusehen, das zu dessen Bedienung möglichst wenig Ablenkung für den Benutzer darstellt.

Die Aufgabe wird erfindungsgemäß gelöst durch die Lehre des ersten und elften Patentanspruchs.

Ein Vorteil der Erfindung ist es, daß die Hand zur Bedienung nicht mehr von dem das Fahrzeug lenkende Lenkrad genommen werden muß, sondern eine Aktivierung von Funktionen oder eine Wahl einer Telefonnummer vom Lenkrad aus erfolgen kann. Es ist lediglich noch nötig, einen Finger, wie z.B. den Daumen, der doch meist untätig am Lenkrad lehnt, zur Betätigung zu benutzen.

Des weiteren ist kein solch großer Rechenaufwand und entsprechend kein solch großer Hardwareaufwand, wie es zum Beispiel für eine Spracherkennung notwendig wäre, nötig. Ebenso kann eine aufwendige Programmierung, wie sie für die Spracherkennung in geräuschbehafteter Umgebung notwendig ist, umgangen werden.

Vorteilhafte Ausgestaltungen der Erfindung sind den Unteransprüchen 2 bis 10 zu entnehmen.

Nach Unteranspruch 2 wird das Mittel zur Zeigersteuerung an einer Lenkvorrichtung in einem Fahrzeug angebracht. Das Mittel zur Zeigersteuerung kann beispielsweise durch eine mechanische Vorrichtung an den Lenkradkranz angebracht werden. Ebenso kann das Mittel in die Lenkradnaabe eingesteckt werden, wenn dort eine Halterung dafür vorgesehen wird.

Nach Unteranspruch 3 ist das Mittel zur Zeigersteuerung eine sogenannte "Maus" oder ein sogenanntes "Touchpad". Durch Rollen der Mauskugel oder durch Drücken des Touchpads wird ein Mauszeiger oder ein Curser auf einer Bedienoberfläche bewegt und in eine gewünschte Position gebracht.

Nach Unteranspruch 4 ist die vorgenannte Bedienoberfläche eine fensterorientierte Bedienoberfläche, wie zum Beispiel Windows von Microsoft.

Nach Unteranspruch 5 stellt sich zu Beginn einer Funktionsaufnahme der Mauszeiger oder der Curser automatisch auf eine häufig verwendete Anwendungsfunktion, um somit die Auswahl noch mehr zu erleichtern. Die Häufigkeit der Auswahl einer Funktion wird statistisch ermittelt. Vorteilhaft ist dabei, daß sich der Suchaufwand und somit die Ablenkung vom eigentlichen Fahrgeschehen weiter verringert.

Nach Unteranspruch 6 ist zusätzlich eine dritte Software implementiert, die eine Sprachausgabe bewirkt. Diese dritte Software wirkt mit der ersten Software für die Zeigersteuerung zusammen. So kann in vorteilhaftere Weise, wenn der Zeiger auf ein Feld bewegt wurde, mittels Sprachausgabe angesagt werden, auf welchem Feld er sich genau befindet.

Nach Unteranspruch 7 wird eine vierte Software für Spracherkennung implementiert, die beispielsweise in der Lage ist, Bestätigungsworte zu erkennen.

Nach Unteranspruch 8 und 9 wird eine Tastatur auf dem Display nachgebildet, und wenn das Display ein Touchscreen ist, kann durch Berührung der Displayobefläche eine Eingabe erfolgen.

Nach Unteranspruch 10 erfolgt die elektrische Anbindung des räumlich abtrennbaren Mittels zur Zeigersteuerung an das Mobilfunkendgerät über einen in einem Fahrzeug vorgesehen Bus, beispielsweise einen optischen Bus.

Im folgenden werden anhand von Figuren Ausführungsbeispiele erläutert. Folgende Figuren zeigen:
Fig. 1: Erfindungsgemäßes Mobilfunkendgerät nach Anspruch 1 und Mittel zur Zeigersteuerung nach Anspruch 10,
Fig. 2A: Anwendungsbeispiel des erfindungsgemäßen Mobilfunkendgerätes,
Fig. 2B: Weiteres Anwendungsbeispiel des erfindungsgemäßen Mobilfunkendgerätes,
Fig. 3: Ablaufdiagramm der ersten Software zur Zeigersteuerung,
Fig. 4: Ablaufdiagramm der zweiten Software für eine Benutzerführung.

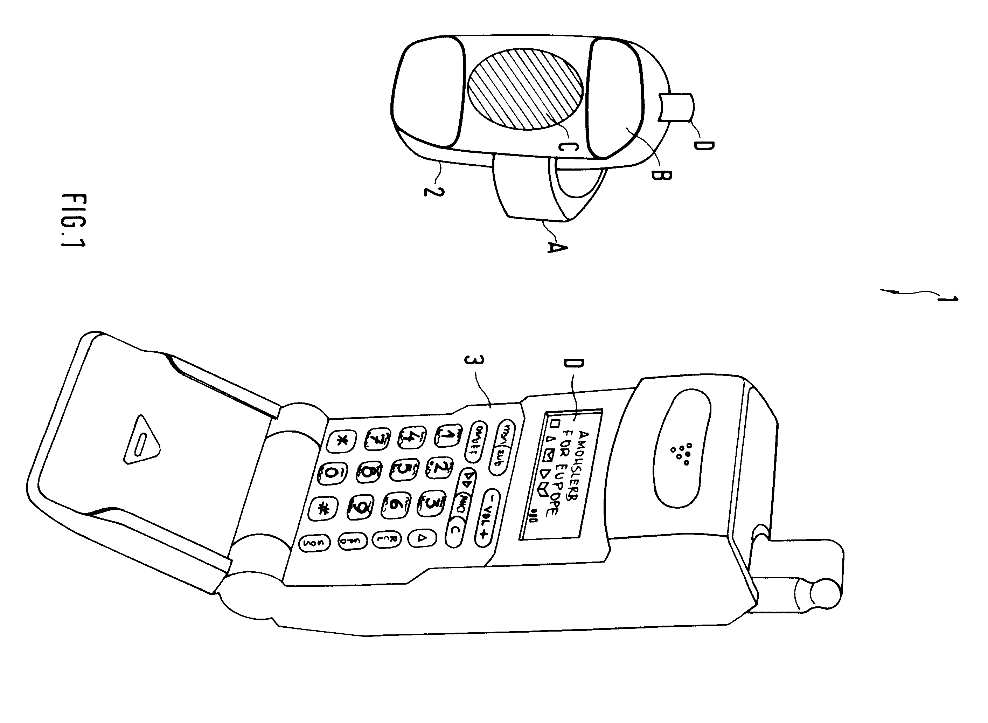

Im folgenden wird anhand von Figur 1 die Erfindung nach Anspruch 1 erläutert:
Das erfindungsgemäße Mobilfunkendgerät 1 setzt sich z.B. aus einem üblichen Mobilfunktelefon 3 und einem räumlich abtrennbaren Mittel 2 zur Zeigersteuerung zusammen. Das räumlich abtrennbare Mittel 2 zur Zeigersteuerung ist mit dem Mobilfunktelefon 3 elektrisch verbunden, wobei hierbei entweder eine drahtgebundene oder eine schnurlose Verbindung vorgesehen werden kann.

Das Mobilfunkendgerät 1 besitzt ebenfalls ein Display D. Das Display D kann in verschiedenen Größen ausgeführt werden und kann dementsprechend in der Größe ausgebildet sein, daß darauf eine Tastatur nachgebildet wird. Für den Fall eines kleineren Displays ist eine Tastatur, wie in der Figur dargestellt, vorgesehen. Auf einen sogenannten Touchscreen kann ein Display emuliert werden, wobei durch Berührung eines Tastenfeldes auf der Displayoberfläche eine Aktion hervorgerufen wird.

In dem Mobilfunkendgerät 1 ist eine erste Software für eine Zeigersteuerung und eine zweite Software für eine Bedienoberfläche vorgesehen. Die Software für eine Bedienoberfläche wirkt auf das Display D und erstellt darauf die Bedienoberfläche. Die Bedienoberfläche kann hierbei beispielweise eine fensterorientierte Bedienoberfläche sein.

Die erste Software für eine Zeigersteuerung wirkt so mit dem räumlich abtrennbaren Mittel zur Zeigersteuerung zusammen, daß beispielsweise ein Mauszeiger oder ein Curser auf der Bedienoberfläche des Displays D bewegt wird. Die zweite Software für eine Bedienoberfläche wird auf dem Display D angezeigt und wirkt so mit dem räumlich abtrennbaren Mittel 2 zur Zeigersteuerung zusammen, daß eine Bewegung des Mittels 2 unterschiedliche Funktionen aktivieren kann.

Um eine gute Handhabung einer Maus als Mittel zur Zeigersteuerung vorsehen zu können, sollte diese vorzugsweise in gerasterter Weise weiterbewegt werden können. Das bedeutet, daß der Mauszeiger nicht dynamisch fortbewegt wird, wodurch er dann schwer zu positionieren ist, sondern daß sich von Funktion zu Funktion sukzessive fortbewegt wird.

Eine weitere Ausgestaltung hierzu kann sein, daß das Mittel 2 zur Zeigersteuerung über die erste Software für eine Zeigersteuerung auf ein Funktionsfeld auf der Bedienoberfläche des Displays D geführt wird und dort in der Lage ist, mittels einer zweiten Software für eine Bedienoberfläche diese Funktion zu aktivieren. Um zu vermeiden, daß der Benutzer auf das Display D schauen muß, somit also abgelenkt wird, kann mittels einer dritten Software für Sprachausgabe jeweils die entsprechende Funktion als Sprache angesagt werden. Für den Fall, daß die Funktion nicht der gewünschten Funktion entspricht, wird der Zeiger auf der Bedienoberfläche weiterbewegt und bei Erreichen eines neuen Funktionsfeldes erfolgt eine erneute Sprachausgabe.

Zur Bestätigung einer Funktion und einer nachfolgenden Ausführung der Funktion kann z.B. eine beliebige Taste , die sich an dem Mittel zur Zeigersteuerung befindet, gedrückt werden, aber es kann auch mittels einer Spracheingabe, wie z.B. "O.K." eine Spracherkennung erfolgen, die dann die Funktion auslöst.

Eine weitere Ausgestaltung kann sein, daß zu Beginn einer Funktionsaufnahme der Zeiger automatisch auf die am häufigsten benutzte Anwendungsfunktion gesetzt wird. Die Häufigkeit wird hierzu statistisch ermittelt.

Im folgenden wird das Mittel zur Zeigersteuerung entsprechend Anspruch 10 anhand der Figur 1 erläutert:
Ein Mittel 2 zur Zeigersteuerung in der Anwendung für ein Mobilfunkendgerät 1 in einem Fahrzeug, beispielweise ein Mobilfunktelefon 3, besteht aus einer Vorrichtung A zur Befestigung an oder einer Vorrichtung zum Einstecken in eine Lenkvorrichtung. Das Mittel besteht aus mindestens einer Eingabebestätigungsvorrichtung B und einer durch einen Finger bedienbaren Vorrichtung C zur Zeigersteuerung. Die Eingabebestätigungsvorrichtung kann beispielsweise eine Drucktaste oder eine Sensortaste sein. Die Vorrichtung C zur Zeigersteuerung kann beispielsweise ein sogenannter "Trackball" sein, wie er aus dem Anwendungsgebiet einer "Maus" für einen Personal-Computer bekannt ist, oder aber ein sogenanntes "Touchpad", oder aber jede andere mögliche, mit einem Finger, vorzugsweise dem Daumen, bedienbare Vorrichtung. Zur Übertragung und zur Herstellung einer Verbindung zu dem Mobilfunktelefon 3, ist eine Schnittstelle D vorgesehen.

Zukünftig könnte eine Anbindung an einen Bus in einem Fahrzeug ebenfalls vorgesehen werden. In dem Fall könnte jedes beliebige, zur Verfügung stehende Display, zur Anzeige benutzt werden. Wird ein Bus in dem Fahrzeug verwendet, kann mit dem Mittel 2 zur Zeigersteuerung auch jede weitere Vorrichtung bedient werden. Beispielweise wäre eine Bedienung eines Radios oder einer Heizung oder aber eines Faxgerätes sowie eines PC's usw. möglich.

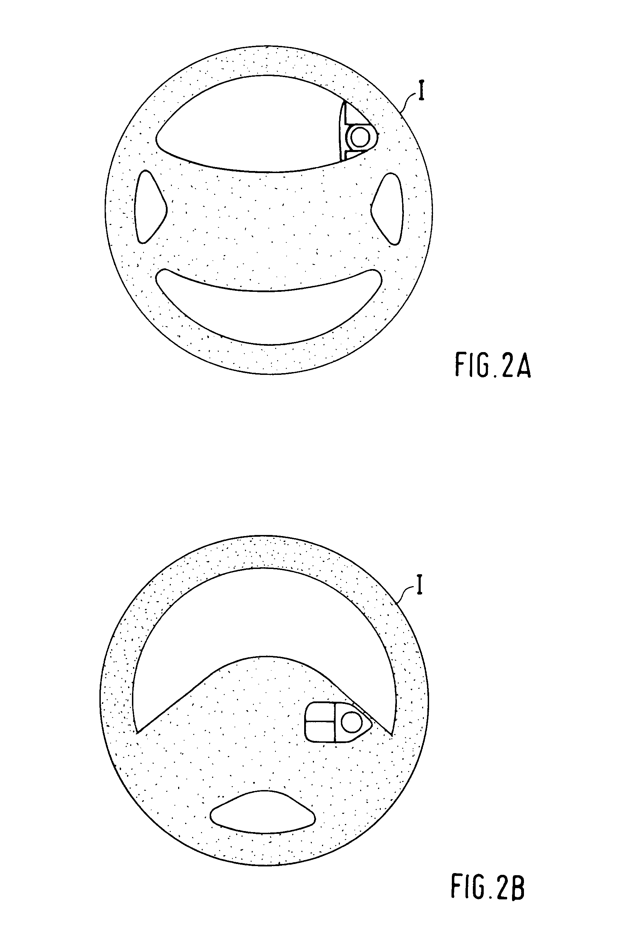

Im folgenden werden die Figuren 2A und 2B erläutert:
In der Figur 2A wird eine Lenkvorrichtung, hier ein Lenkrad I eines Kraftfahrzeuges dargestellt. Während des Fahrens liegen die Hände in der sogenannten "Viertelvordrei-Stellung", also genau in der Horizontalen, die strichpunktiert eingezeichnet ist. Der Daumen ruht dabei auf der Vorderseite des Lenkrades und kann, ohne den Fahrvorgang zu beschränken, bewegt werden.

Das Mittel zur Zeigersteuerung 2 eines Mobilfunkendgerätes wird an den Lenkradkranz so angebracht, daß der Daumen, sowohl auf die mindestens eine Eingabebestätigungsvorrichtung B, hier eine Drucktaste, als auch auf die mit einem Finger, hier dem Daumen, bedienbare Vorrichtung C zur Zeigersteuerung gelangen kann.

Entsprechend Figur 2B wird das Mittel zur Zeigersteuerung 2 in das Lenkrad hineingesteckt. Die Anordnung der mindestens einen Drucktaste B und der Vorrichtung zur Zeigersteuerung C ist beliebig horizontal oder vertikal vorgesehen, so wie es praktikabel ist bzw. wie es bequem für einen Benutzer anwendbar ist.

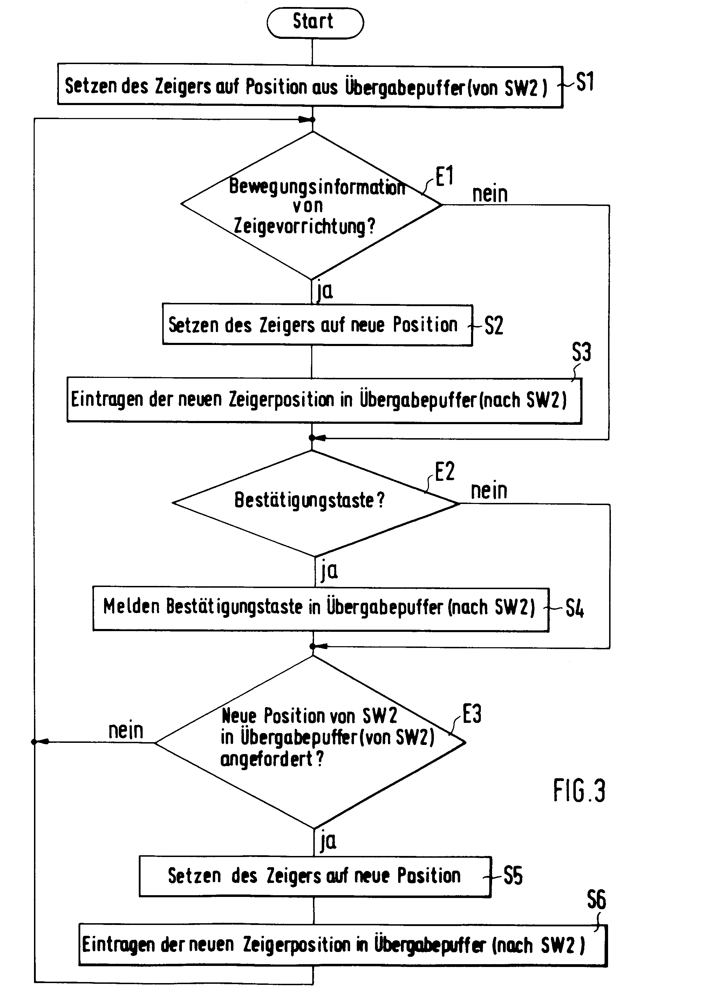

Im folgenden wird anhand von Fig. 3 eine mögliche Ausgestaltung der ersten Software für eine Zeigersteuerung erläutert:
In einem ersten Schritt S1 wird das Setzen des Zeigers auf eine Position aus einem Übergabepuffer vorgenommen. In einem ersten Entscheidungsglied E1 wird festgestellt, ob eine Bewegungsinformation von der Zeigervorrichtung vorliegt. Für den Fall, daß eine Bewegungsinformation vorliegt, wird in einem zweiten Schritt S2 der Zeiger auf eine neue Position gesetzt und in einem dritten Schritt S3 wird die neue Zeigerposition in den Übergabepuffer eingetragen.

Für den Fall, daß keine Bewegungsinformation vorliegt, werden der zweite Schritt S2 und der dritte Schritt S3 ausgelassen und der Ablauf setzt sich wie folgt fort:

In einem zweiten Entscheidungsglied E2 wird festgestellt, ob eine Bestätigungstaste betätigt wurde. Für den Fall, daß die Bestätigungstaste betätigt wurde, wird in einem vierten Schritt S4 das Melden der Bestätigungstaste in den Übergabepuffer vorgenommen.

Für den Fall, daß die Bestätigungstaste nicht betätigt wurde, wird dieser vierte Schritt S4 ausgelassen.

In einem dritten Entscheidungsglied E3 wird festgestellt, ob eine neue Position der zweiten Software - im folgenden SW2 genannt - in dem Übergabepuffer angefordert wird. Für den Fall, daß diese angefordert wird, wird in einem fünften Schritt S5 das Setzen des Zeigers auf die neue Position vorgenommen , und in einem sechsten Schritt S6 wird die neue Zeigerposition in den Übergabepuffer eingetragen.

Für den Fall, daß die neue Position der zweiten Software nicht angefordert wird, werden dieser fünfte Schritt S5 und der sechste Schritt S6 ausgelassen. Der Ablauf setzt sich dann so fort, daß erneut im Ablauf vor dem ersten Entscheidungsglied begonnen wird.

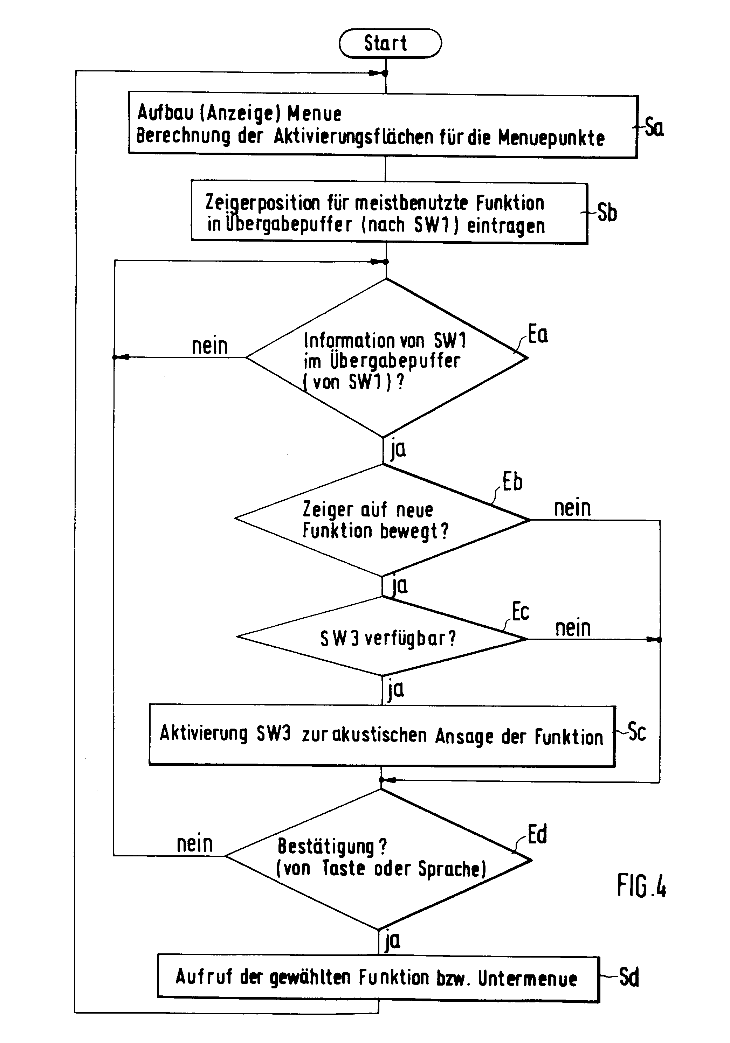

Im folgenden wird anhand von Figur 4 eine mögliche Ausgestaltung der zweiten Software für eine Bedienoberfläche erläutert.

In einem ersten Schritt Sa wird ein Aufbau oder eine Anzeige eines Menues erstellt. Dazu wird eine Berechnung der Aktivierungsfläche für die Menuepunkte vorgenommen.

In einem zweiten Schritt Sb wird eine Zeigerposition für eine am häufigsten benutzte Funktion in den Übergabepuffer eingetragen.

In einem ersten Entscheidungsglied Ea wird festgestellt, ob eine Information von der ersten Software, im folgenden SW1 genannt, vorliegt. Für den Fall, daß diese Information nicht vorliegt, wird wieder zurückgesprungen und die erste Entscheidung muß wieder getroffen werden. Für den Fall, daß die Information vorliegt, wird in einem zweiten Entscheidungsglied Eb festgestellt, ob der Zeiger auf eine neue Funktion bewegt wurde. Für den Fall, daß der Zeiger bewegt wurde, wird in einem dritten Entscheidungsglied Ec festgestellt, ob die dritte Software, im folgenden SW3 genannt, verfügbar ist. Für den Fall, daß die dritte Software verfügbar ist, wird in einem dritten Schritt Sc eine Aktivierung dieser zur akustischen Ansage der Funktion vorgenommen. Für den Fall, daß sowohl die Entscheidung des zweiten Entscheidungsgleides Eb als auch die Entscheidung des dritten Entscheidungsgliedes Ec negativ, also nein, ist, wird nach dem dritten Schritt Sc fortgefahren. In einem vierten Entscheidungsglied Ed wird festgestellt, ob eine Bestätigung entweder durch Betätigung einer Taste oder durch Sprache erfolgt ist. Für den Fall, daß keine Bestätigung erfolgt ist, wird zurückgesprungen und der weitere Ablauf beginnt erneut vor dem ersten Entscheidungsglied Ea.

Für den Fall, daß eine Bestätigung erfolgt ist, wird in einem vierten Schritt Sd der Aufruf der gewählten Funktion oder eines Untermenues ausgeführt. Im weiteren Verlauf beginnt der ganze Ablauf wieder von vorne.

## Patentansprüche

1. Mobilfunkendgerät (1) mit
einem räumlich abtrennbaren Mittel (2) zur Zeigersteuerung,
mit einem Display (D) und
mit einer ersten Software für eine Zeigersteuerung,
und mit einer zweiten Software für eine Bedienoberfläche, die auf dem Display (D) angezeigt wird, wobei die erste und die zweite Software mit dem räumlich abtrennbaren Mittel (2) zur Zeigersteuerung zusammenwirkt.

2. Mobilfunkendgerät nach Anspruch 1, bei dem das abtrennbare Mittel (2) zur Zeigersteuerung an eine Lenkvorrichtung in einem Fahrzeug oder in einer Lenkvorrichtung in dem Fahrzeug anbringbar ist.

3. Mobilfunkendgerät nach Anspruch 1 oder 2, bei dem das Mittel zur Zeigersteuerung (2) ein Mittel ist, mit dem ein Mauszeiger oder ein Cursor auf der Bedienoberfläche auf dem Display (D) bedient werden kann.

4. Mobilfunkendgerät nach Anspruch 3, bei dem die Bedienoberfläche eine fensterorientierte Bedienoberfläche ist.

5. Mobilfunkendgerät nach einem der Ansprüche 1 bis 4, bei dem das Mittel (2) zur Zeigersteuerung zu Beginn einer Funktionsaufnahme des Mobilfunkendgerätes (1) automatisch auf eine statistisch ermittelte, am häufigsten verwendete Anwendungsfunktion zeigt.

6. Mobilfunkendgerät nach einem der Ansprüche 1 bis 5, bei dem eine dritte Software für Sprachausgabe implementiert ist, die mit der ersten Software für die Zeigersteuerung zusammenwirkt.

7. Mobilfunkendgerät nach einem der Ansprüche 1 bis 6, bei dem eine vierte Software für Spracherkennung implementiert ist.

8. Mobilfunkendgerät nach einem der Ansprüche 1 bis 7, bei dem das Display ein Touchscreen ist.

9. Mobilfunkendgerät nach Anspruch 8, bei dem eine Tastatur auf dem Display nachgebildet wird.

10. Mobilfunkendgerät nach einem der Ansprüche 1 bis 9, bei dem das räumlich abtrennbare Mittel (2) zur Zeigersteuerung über einen Bus mit dem Mobilfunkendgerät (1) verbunden ist.

11. Mittel zur Zeigersteuerung (2) eines Mobilfunkgerätes (1) in einem Fahrzeug,
bestehend aus
einer Vorrichtung (A) zur Befestigung an oder zum Einstecken in eine Lenkvorrichtung, einem durch einen Finger bedienbaren Vorrichtung (C) zur Zeigersteuerung,
mindestens einer Eingabebestätigungsvorrichtung (B),
und einer Schnittstelle (D) zur Herstellung einer Verbindung zu dem Mobilfunkendgerät.
